# EUROPÄISCHE PATENTANMELDUNG

(11) **EP 4 563 418 A1**
(43) Veröffentlichungstag der Anmeldung: **04.06.2025**
(21) Anmeldenummer: 24215225.4
(22) Anmeldetag: 25.11.2024
(51) Int. Cl.: B60R 25/09, B60B 1/00, B60B 7/16

(54) **WEGFAHRSPERRE**

(30) Priorität: 28.11.2023 DE 202023107039 U
(71) Anmelder: Alois Kober GmbH, 89359 Kötz (DE)
(72) Erfinder: Gregg, Thomas, 89522 Heidenheim (DE); Spiegler, Harald, 89312 Günzburg (DE)
(74) Vertreter: ERNICKE Patent- und Rechtsanwälte PartmbB

(57) **Zusammenfassung**

Die Erfindung betrifft eine Wegfahrsperre für ein Fahrzeugrad (2) eines Strassenfahrzeugs (3) und ein Montageverfahren, wobei die Wegfahrsperre (1) eine die Wegfahrbewegung des Fahrzeugrads (2) verhindernde Sperrvorrichtung (8) mit einem gehäuseartigen Receiver (23) nebst einem daran angeordneten, eine Wegfahrbewegung des Fahrzeugrads (2) sperrenden Sperrmittel (22) und eine Fixiervorrichtung (9) umfasst, welche dazu ausgebildet ist, die Sperrvorrichtung (8) an einer drehbaren Radfelge (4) des Fahrzeugrads (2) lösbar und sicherbar zu fixieren. Die Fixiervorrichtung (9) umfasst ein Ersatz-Befestigungsmittel (10) für die Befestigung der Radfelge (4) am Strassenfahrzeug (3), eine Riegeleinrichtung (12) und eine Sicherungseinrichtung (13). Die Riegeleinrichtung (12) weist zusammenwirkende und von der Sicherungseinrichtung (13) beaufschlagbare Riegelelemente (44,45) auf, die in Eingriffsstellung ein Entfernen der Sperrvorrichtung (8) vom Fahrzeugrad (2) verhindern. Die Fixiervorrichtung (9) umfasst einen länglichen Adapter (11), welcher durch ein Verbindungsmittel (18), insbesondere ein Schraubmittel, mit dem freien Endbereich (21) des Ersatz-Befestigungsmittels (10) und in dessen axialer Verlängerung verbindbar oder verbunden ist. Ein erstes Riegelelement (44) ist am Adapter (11) angeordnet. Ein weiteres Riegelelemente (45) ist im Receiver (23) angeordnet und kann mittels der Sicherungseinrichtung (13), insbesondere eines Schlosses (49), bewegt und in sicherbaren Eingriff mit dem ersten Riegelelement (44) gebracht werden.

## Beschreibung

Die Erfindung betrifft eine Wegfahrsperre für ein Fahrzeugrad eines Strassenfahrzeugs mit den Merkmalen im Oberbegriff des Hauptanspruchs.

Eine solche Wegfahrsperre ist aus der GB 2 483 109 B bekannt. Die Wegfahrsperre kann am Fahrzeugrad eines Strassenfahrzeugs, insbesondere eines Fahrzeuganhängers, angebaut werden und dient als Diebstahlsicherung. Sie umfasst eine die Wegfahrbewegung des Fahrzeugrads verhindernde Sperrvorrichtung mit einem gehäuseartigen Receiver und eine Fixiervorrichtung, welche dazu ausgebildet ist, die Sperrvorrichtung an einer drehbaren Radfelge des Fahrzeugrads lösbar und sicherbar zu fixieren. Die Fixiervorrichtung weist ein Ersatz-Befestigungsmittel, eine Riegeleinrichtung und eine Sicherungseinrichtung auf. Das Ersatz-Befestigungsmittel ist z.B. als Ersatz-Radschraube ausgebildet und kann im Austausch gegen ein normales Radbefestigungsmittel für die Befestigung der Radfelge am Fahrzeug benutzt werden.

Bei der vorbekannten Wegfahrsperre ist die Riegeleinrichtung mit einem axial am Receiver einsetzbaren Steckschloss verbunden und wirkt mit dem Ersatz-Befestigungsmittel zusammen. Die Riegeleinrichtung ist als Sperrkugel-Verriegelung ausgebildet, wobei am Ersatz-Befestigungsmittel eine Aufnahmehülse mit hinterschnittenen Kugelaufnahmen und am Radschloss ein Zapfen mit umfangseitig verteilten radialbeweglichen Sperrkugeln angeordnet sind. Die sensible Riegel- und Eingriffsstelle der Riegeleinrichtung ist am freien Ende des Ersatzbefestigungsmittels angeordnet. Sie befindet sich in einem seitlich zugänglichen Abstandsbereich zwischen der Radfelge und dem Receiver.

Die GB 2 276 133 A zeigt eine andere Wegfahrsperre, bei der eine die Wegfahrbewegung des Fahrzeugrads verhindernde, quer gerichtete Sperrstange an Radbolzen eines Fahrzeugrads mittels Haltern lösbar befestigt wird. Die Halter umfassen jeweils einen Aufnahmering und einen außen am Ringmantel befestigten Stützarm, der in hülsenartige Ersatz-Befestigungsmittel geschraubt werden kann. Die Sperrstange wird durch die Aufnahmeringe gesteckt und kann gegen unbefugtes Entfernen aus den Aufnahmeringen durch unterschiedlich ausgebildete Riegeleinrichtungen oder ein Vorhängeschloss gesichert werden. Bei anderen Ausführungen sind die Stützarme starr und/oder verschieblich an der Sperrstange angeordnet, wobei Riegeleinrichtungen mit Schlössern in den Stützarmen angeordnet sind und den Eingriff der Stützarme mit den Ersatz-Befestigungsmitteln sichern.

Es ist Aufgabe der vorliegenden Erfindung, eine Wegfahrsperre mit höherer Sicherheit aufzuzeigen.

Die Erfindung löst diese Aufgabe mit den Merkmalen in den selbständigen Ansprüchen.

Die Wegfahrsperre ist für ein Fahrzeugrad eines Strassenfahrzeugs vorgesehen und ausgebildet. Die Wegfahrsperre umfasst eine die Wegfahrbewegung des Fahrzeugrads verhindernde Sperrvorrichtung und eine Fixiervorrichtung. Die Sperrvorrichtung weist einen gehäuseartigen Receiver und ein daran angeordnetes, eine Wegfahrbewegung des Fahrzeugrads sperrendes Sperrmittel auf. Die Fixiervorrichtung ist dazu ausgebildet, die Sperrvorrichtung an einer drehbaren Radfelge des Fahrzeugrads lösbar und sicherbar zu fixieren. Die Fixiervorrichtung umfasst ein Ersatz-Befestigungsmittel, eine Riegeleinrichtung (12) eine Sicherungseinrichtung. Das Ersatz-Befestigungsmittel ist für die Befestigung der Radfelge am Strassenfahrzeug, insbesondere an einer Radnabe, ausgebildet. Die Riegeleinrichtung umfasst zusammenwirkende und von der Sicherungseinrichtung beaufschlagbare Riegelelemente, die in Eingriffsstellung ein Entfernen der Sperrvorrichtung vom Fahrzeugrad verhindern.

Nach einem ersten Erfindungsaspekt umfasst die Fixiervorrichtung einen länglichen Adapter, der durch ein Verbindungsmittel, insbesondere ein Schraubmittel, mit dem freien Endbereich des Ersatz-Befestigungsmittels und in dessen axialer Verlängerung verbindbar oder in Montagestellung verbunden ist. Ein erstes Riegelelement ist am Adapter angeordnet, wobei ein weiteres Riegelelement an der Sperrvorrichtung im gehäuseartigen Receiver, angeordnet ist und mittels der Sicherungseinrichtung bewegt und in sicherbaren Eingriff mit dem ersten Riegelelement gebracht werden kann. Das erste Riegelelement kann in beliebiger Weise, insbesondere starr oder stationär, am Adapter angeordnet sein. Der längliche Adapter ist in den gehäuseartigen Receiver einsteckbar.

Diese Ausbildung der Wegfahrsperre hat den Vorteil, dass die Riegel- und Eingriffstelle vom Ersatz-Befestigungsmittel distanziert und näher an den gehäuseartigen Receiver herangebracht werden kann. Sie kann in einer besonders günstigen Ausführung in den Receiver verlegt werden. Die Riegeleinrichtung ist dadurch besser gegen sabotierende Eingriffe von außen gesichert.

Dies ist besonders günstig für den bevorzugten Anbau der Wegfahrsperre an Fahrzeuganhängern. Diese werden häufig längere Zeit unbewacht abgestellt, z.B. auf einem Dauer-Campingplatz, und sind Diebstahlsversuchen mit Sabotage und gewaltsamer Entfernung der Wegfahrsperre ausgesetzt. Zudem können die Riegeleinrichtung und ihre Riegelelemente einfacher und kostengünstiger hergestellt werden. Ferner werden die Verschmutzungsgefahr und eine damit einhergehende Funktionsgefährdung verringert, was ebenfalls die Sicherheit erhöht. Die beanspruchte Wegfahrsperre kann in der sperrenden Anbaustellung am Fahrzeugrad nicht so leicht sabotiert, gewaltsam beschädigt oder zerstört und vom Fahrzeugrad gelöst werden. Die beanspruchte Wegfahrsperre kann dadurch ihre Funktion als Diebstahlssicherung für das Strassenfahrzeug besser und zuverlässiger ausüben als der Stand der Technik.

Die Verbindung von Ersatz-Befestigungsmittel und Adapter kann lösbar sein. Dies ist günstig, um zunächst das Ersatz-Befestigungsmittel an der Radfelge in üblicher Weise befestigen und anschließend den Adapter am Ersatz-Befestigungsmittel montieren zu können. Ein Schraubmittel bietet in Montagestellung eine hohe Festigkeit und Sabotagesicherheit, die besser ist als bei bekannten Sperrkugel-Verriegelung. Das Ersatz-Befestigungsmittel kann bei einer anderen geeigneten Radbefestigungstechnik auch dauerhaft und fest mit dem Adapter verbunden sein, z.B. durch stoffliche Verbindung, insbesondere Anformen.

Nach einem weiteren und eigenständigen Erfindungsaspekt kann ausgehend von der vorbekannten Wegfahrsperre der gehäuseartige Receiver einen hohlen Innenraum aufweisen, der zumindest bereichsweise mit einer Füllung aus einem Antisabotage-Material versehen ist. Das Antisabotage-Material kann z.B. Korund oder ein anderes verschleißförderndes Material sein, welches ein Aufschneiden oder Aufsägen des Receivers mit einer rotierenden Trennscheibe oder Sägescheibe oder einem anderen Trennmittel verhindert, indem es ein solches Trennmittel schnell stumpf macht und seiner Trennwirkung beraubt. Dieser zweite Erfindungsaspekt kann in Verbindung mit einer vorbekannten Wegfahrsperre oder auch mit einer nach dem ersten Erfindungsaspekt ausgebildeten Wegfahrsperre kombiniert werden.

In Weiterbildung des ersten Erfindungsaspektes ist es vorteilhaft, wenn das erste Riegelelement beweglich am Adapter gelagert sowie mittels einer Stelleinrichtung in seinem axialen Abstand zum Ersatz-Befestigungsmittel verstellbar ist. Das erste Riegelelement kann längs des Adapters bzw. in Axialrichtung beweglich sein.

Die Receiverposition ist durch die Eingriffsstellung des beweglichen ersten Riegelelements und des weiteren, in Axialrichtung am Receiver festgelegten Riegelelements bestimmt. Dies ermöglicht es, die Fixiervorrichtung axial verstellbar auszubilden, um die Sperrvorrichtung in einem einstellbaren axialen Abstand (a) an der Radfelge zu montieren. Dieser axiale Abstand kann durch eine Verstellung des ersten Riegelelements am Adapter eingestellt werden.

Die besagte Axialausrichtung kann sich hierbei und im Folgenden auf die Radachse des Fahrzeugrads beziehen. Die Längsachse der Fixiervorrichtung kann in Anbaustellung üblicherweise parallel zur Radachse ausgerichtet sein.

Dies erlaubt eine möglichst nahe Montage der Wegfahrsperre und ihres Receivers an der Felge. Dabei kann auf bauliche Gegebenheiten der Felge und z.B. gewölbte Felgenstege oder dgl. Rücksicht genommen werden. Der besagte axiale Abstand kann je nach Felgenbauart optimiert und insbesondere möglichst klein gehalten werden. Dies verringert die seitlichen Eingriffs- und Sabotagemöglichkeiten und erhöht die Sicherheit der Wegfahrsperre.

Der Receiver kann mittels der Riegeleinrichtung lösbar an der Fixiervorrichtung montiert werden. In einer besonders sicheren Ausführungsform können dabei die Riegelelemente in Montagestellung in einem hohlen Innenraum des Receivers angeordnet sein. Sie sind dadurch besonders gut gegen Sabotagezugriff von außen gesichert. Die Befüllung des Innenraums, insbesondere von Deckelkammern, des Receivers mit dem Antisabotage-Material ist hierfür besonders vorteilhaft.

Die Sperrvorrichtung kann ein Sperrmittel umfassen, welches eine Wegfahrbewegung des Fahrzeugrads sperrt und welches bevorzugt verstellbar am Receiver angeordnet ist. Das Sperrmittel kann z.B. als Sperrstange in unterschiedlichen Varianten gestaltet sein.

Für die sichere Funktion der Wegfahrsperre ist es günstig, wenn die Fixiervorrichtung und das Sperrmittel jeweils eigenständig und örtlich getrennt voneinander am Receiver angeordnet werden können. Ferner ist es vorteilhaft, wenn in der Montagestellung das Sperrmittel und die seitlich hiervon distanzierte Fixiervorrichtung gemeinsam am Receiver angeordnet werden können und sich in die gleiche axiale Richtung zur Radfelge erstrecken können. Die Sabotagesicherheit kann höher als bei einem parallel zur Radfelge erstreckten Sperrmittel sein.

In einer Variante kann die Sperrstange das Fahrzeugrad durch eine Felgenöffnung durchgreifen und kann an seinem freien Ende einen Überstand haben, mit dem die Sperrstange bei einer Raddrehung an einem Fahrzeugteil, z.B. an der Radaufhängung, anschlägt und die weitere Raddrehung und somit die Wegfahrbewegung des Rades verhindert. In einer anderen Variante kann die Sperrstange das Fahrzeugrad und dessen Reifen außenseitig umgreifen und ebenfalls am freien Ende einen Überstand mit einer entsprechenden sichernden Anschlagfunktion am Fahrzeug bei einer Raddrehung haben. Daneben sind andere Ausbildungs- und Funktionsvarianten des Sperrmittels möglich.

Der gehäuseartige Receiver kann dazu ausgebildet sein, das Sperrmittel mit der hiervon seitlich distanziert angeordneten Fixiervorrichtung mechanisch zu verbinden und zu überdecken. Der Receiver kann wie eine Schutzhaube wirken, die nahe an der Radfelge angeordnet werden kann und die das Sperrmittel und die Fixiervorrichtung schützend überdeckt. Das Sperrmittel und die Fixiervorrichtung können dabei mit seitlichem Abstand vom Rand des Receivers angeordnet sein, was die Sicherheit zusätzlich erhöht.

Das Ersatz-Befestigungsmittel kann einen Korpus mit einem Radbefestigungselement, einem Betätigungselement für die Radbefestigungsfunktion und einem Verbindungselement des Verbindungsmittels zur Adapterverbindung aufweisen. Das Radbefestigungselement kann in einer vorteilhaften Ausgestaltung als Radschraubbolzen gestaltet sein. Es kann alternativ als schraubbare Radmutter oder in anderer Weise gestaltet sein. Das Betätigungselement für das Anbringen und Entfernen des Ersatz-Befestigungsmittels an der Felge kann z.B. als Sechskant, Torx oder als anderer nichtrotationssymmetrischer, z.B. prismatischer, Körper ausgebildet sein. Ein Sechskant ist eine übliche Bauform, die auch die normalen Radschrauben oder Radmuttern der Radbefestigung haben. Das Ersatz-Befestigungsmittel kann dabei mit einem üblichen Werkzeug zum Anbringen der Wegfahrsperre an der Radfelge befestigt und zum Abnehmen der Wegfahrsperre auch wieder entfernt werden. Das Ersatz-Befestigungsmittel kann auch im Fahrbetrieb am Fahrzeugrad verbleiben. Das Betätigungselement kann aber auch in anderer Weise ausgebildet sein.

Das Verbindungsmittel zur bevorzugt lösbaren Verbindung des Ersatz-Befestigungsmittels mit dem Adapter kann in unterschiedlicher Weise ausgestaltet sein. Besonders günstig ist eine Ausbildung als Schraubmittel. Dies bietet auch durch die mechanische Stabilität einer Schraubverbindung eine hohe Sicherheit gegen Sabotageangriffe. Das Verbindungselement am Ersatz-Befestigungsmittel kann vorzugsweise als Schrauböffnung ausgestaltet sein, wobei der Adapter dann einen Schraubbolzen aufweist. Diese Zuordnung kann auch umgekehrt sein, wobei z.B. das Verbindungselement am Ersatz-Befestigungsmittel als Schraubbolzen an einer Radschraube und das Verbindungselement am Adapter als Schraubmutter ausgebildet sein können. Alternativ können das Verbindungsmittel und seine Verbindungselemente am Ersatz-Befestigungsmittel und am Adapter in anderer Weise ausgebildet sein. Bevorzugt wird dabei eine formschlüssige Verbindung mit einer besonders großen Verbindungslänge und Überdeckung.

Für die Ausbildung des Ersatz-Befestigungsmittels und seines Korpus gibt es verschiedene Möglichkeiten. Der Korpus kann eine Hülsenform haben, wobei das Betätigungselement als Innensechskant ausgebildet und innen im Korpus angeordnet ist. Das Verbindungselement des Verbindungsmittels zur Adapterverbindung kann axial unter oder auch über dem Innensechskant angeordnet sein. Das Ersatz-Befestigungsmittel kann dadurch über den Innensechskant zunächst an der Felge befestigt werden, wobei es anschließend mit dem Adapter verbunden wird.

In einer anderen Ausführung kann das Betätigungselement als Außensechskant ausgebildet und an einem Ansatz des Korpus angeordnet werden. Das Verbindungselement des besagten Verbindungsmittels zur Adapterverbindung kann dann am Ansatz angeordnet sein. Es kann z.B. als Schrauböffnung in einem entsprechend hohl ausgebildeten Ansatz angeordnet sein. Es kann auch als zapfenförmiger Schaubaufsatz am Ansatz und in dessen Verlängerung angeordnet sein. Ferner ist es möglich, ein Gewinde oder ein anderes Verbindungsmittel außenseitig am Korpusmantel anzubringen und den Adapter und sein Verbindungselement zumindest bereichsweise hülsenartig auszugestalten.

Der längliche Adapter kann einen Schaft aufweisen, an dem einerseits ein Verbindungselement des besagten Verbindungsmittels und andererseits das erste Riegelelement angeordnet sind. Der Schaft kann dabei bevorzugt stangenartig ausgebildet sein. Das Verbindungselement und das Riegelelement können an verschiedenen Endbereichen des Adapters angeordnet sein. Das Verbindungselement des besagten Verbindungsmittels kann z.B. als Schraubzapfen, alternativ auch als Schrauböffnung oder in anderer geeigneter Weise ausgestaltet sein.

Die Stelleinrichtung zur Verstellung des beweglich am Adapter, insbesondere an dessen Schaft, gelagerten ersten Riegelelements kann in unterschiedlicher Weise ausgebildet sein.

Die Stelleinrichtung kann ein stellbares Arretiermittel zum Arretieren des Riegelelements im gewünschten axialen Abstand zum umfassen. Ein solches Arretiermittel kann formschlüssig und/oder kraftschlüssig wirken und kann z.B. als Arretierschraube ausgestaltet sein. Das Arretiermittel ist auch nützlich zur Montage und Verbindung des Adapters mit dem Ersatz-Befestigungsmittel.

In einer bevorzugten Ausführung kann die Stelleinrichtung einen axial beweglich am Adapter gelagerten Stellkörper mit dem ersten Riegelelement umfassen. Die Stelleinrichtung kann ferner eine einstellbare Bewegungseinrichtung, z.B. eine Stellverschraubung, aufweisen, die zur axialen Verstellung des Stellkörpers am Adapter ausgebildet ist. Hierfür kann die Stellverschraubung kämmende Gewindeabschnitte am Schaft und an dem mutterartig ausgebildeten Stellkörper umfassen. Die Bewegungseinrichtung kann alternativ in anderer Weise ausgebildet sein.

Durch eine Stellbewegung, insbesondere Schraubbewegung, kann der Stellkörper am Adapter, insbesondere an dessen Schaft, axial verstellt und auf den gewünschten axialen Abstand zum Ersatz-Befestigungsmittel eingestellt werden.

Der Receiver kann bevorzugt im hohlen Innenraum eine definierte, bevorzugt formschlüssige, Aufnahme für den Adapter, insbesondere den Stellkörper, und für die Riegelelemente aufweisen. Der Adapter, insbesondere der Stellkörper, kann dabei eine durch Anschlag oder auf andere Weise definierte Aufnahmeposition im Receiver haben. Hierüber kann eine gegenseitige Bezugsposition vom Adapter, insbesondere vom Stellkörper, mit dem ersten Riegelelement und vom Receiver definiert werden. Bei einer Verstellung des Stellkörpers kann der Receiver in gleicher Weise axial verstellt werden. Dies ist für die besagte axiale Abstandseinstellung des Receivers zur Radfelge günstig.

Das erste Riegelelement kann am Adapter, insbesondere am Mantel des bevorzugt zylindrischen Stellkörpers, angeordnet sein. Bei einer anderen Ausführung kann das erste Riegelelement starr am Adapter angeordnet sein, z.B. an dessen freiem Endbereich, der z.B. schaftartig oder zapfenartig ausgebildet sein kann. Das erste Riegelelement kann eine Ringform aufweisen. Das erste Riegelelement kann als Vorsprung oder Vertiefung, insbesondere als vorstehender Ringbund oder als vertiefte Ringnut, für einen formschlüssigen Eingriff mit dem weiteren Riegelelement ausgebildet sein. Das weitere Riegelelement kann derart komplementär zum ersten Riegelelement gestaltet sein, dass ein formschlüssiger Eingriff möglich ist. Das weitere Riegelelement kann z.B. als Riegelzapfen gestaltet sein, der in die Ringnut bevorzugt in Radialrichtung formschlüssig eingreift. Das weitere Riegelelement kann auch als Gabel gestaltet sein, welche in Eingriffstellung den Boden der Ringnut umgreift. Entsprechende Ausgestaltungen sind auch bei der Variante eines Ringbunds möglich. Je nach Ausbildung der Stelleinrichtung und der Axialverstellung ihres Stellkörpers sind auch andere Ausbildungen der Riegelelemente, z.B. als Zapfen und als Sackloch, möglich. Solche anderen Ausbildungen der Riegelelemente sind auch für starr oder stationär am Adapter angeordnete Riegelelemente möglich.

Das weitere Riegelelement ist in einer besonders sicheren Ausgestaltung versenkt im Receiver angeordnet. Es ist dabei eigenständig und quer zur Längsachse des Adapters beweglich gelagert. Die Riegeleinrichtung kann einen Riegelaktor umfassen, der die Riegelelemente in und außer Eingriff bringt. Der Riegelaktor kann an der Sicherungseinrichtung, insbesondere an deren Schloss, ausgebildet sein. Die Anordnung und Bewegungsrichtung des Riegelaktors und der Sicherungseinrichtung kann quer zur Längsachse der Fixiervorrichtung, insbesondere des Adapters, angeordnet und ausgebildet sein. Diese am oder im Receiver definierte Position des weiteren Riegelelements ist besonders günstig, um auf einfache und leicht bedienbare Weise den gewünschten Abstand des Receivers und seines Bodens von der Radfelge einstellen zu können.

Der Receiver kann einen Boden mit Durchgangs- und Durchlassöffnungen für das Sperrmittel und die Fixiervorrichtung aufweisen. Der Receiver kann im Innenraum, insbesondere am Deckel, eine zum Boden hin stirnseitig offene, bevorzugt zylindrische und adaptierte, Führungshülse für den Adapter, insbesondere für den Stellkörper des Adapters, aufweisen. Die Führungshülse kann die besagte definierte, bevorzugt formschlüssige, Aufnahme bilden.

Die Führungshülse kann am anderen Stirnende einen Hülsenboden und am Mantel eine seitliche Durchtrittsöffnung für das weitere Riegelelement aufweisen. Der Hülsenboden kann in Montagestellung einen Anschlag für den Adapter, insbesondere für den Stellkörper, bilden. In Anschlagstellung des Adapters, insbesondere des Stellkörpers, am Hülsenboden können die Riegelelemente in eingriffsfähiger Relativstellung zueinander angeordnet sein. Hierdurch wird auch ein gemeinsamer axialer Lagebezug von Adapter, insbesondere Stellkörper, und Receiver zum Ersatz-Befestigungsmittel sowie zur Radfelge hergestellt.

Dies erlaubt eine einfache und genaue Einstellung des gewünschten Abstands des Receivers von der Radfelge bei Anbau der Wegfahrsperre am Fahrzeugrad. In der besagten Montage- und Anschlagstellung von Receiver und Fixiervorrichtung kann der axiale IST-Abstand des Receivers von der Radfelge gemessen und eine evtl. Differenz zum SOLL-Abstand ermittelt werden. Nach Demontage des Receivers kann dann bedarfsweise der gewünschte Abstand durch Verstellen des Stellkörpers am Adapter um die ermittelte Differenz eingestellt werden. Der Stellkörper kann hierfür z.B. mittels der Stellverschraubung und einer bekannten Gewindesteigung um einen entsprechenden Winkel gedreht werden. In der erneut eingenommenen Montage- und Anschlagstellung hat dann der Receiver den gewünschten Abstand von der Radfelge.

Der Receiver kann einen Boden und einen schalenartigen Deckel umfassen. Der Boden und der schalenartigen Deckel können den hohlen Innenraum des Receivers und die evtl. dortige, zumindest bereichweise Füllung aus einem Antisabotage-Material, insbesondere Korrund, umschließen. Der Boden kann mehrlagig ausgebildet sein, was einerseits für die definierte und mechanisch feste Ausbildung der Führung für das Sperrmittel und andererseits für die Stabilität des Bodens und seiner Verbindung mit dem Deckel von Vorteil ist.

Der Deckel kann außenseitig im Überdeckungsbereich der montierten Fixiervorrichtung versteifende Rippen aufweisen, die Sabotageversuche erschweren und die Sicherheit erhöhen können.

Bei einem Verfahren zum sicheren Anbau der beanspruchten Wegfahrsperre an einem Fahrzeugrad eines Strassenfahrzeugs wird die Fixiervorrichtung am Fahrzeugrad befestigt und dann die Sperrvorrichtung auf der Fixiervorrichtung, insbesondere auf ihrem Adapter, montiert, insbesondere aufgesetzt. Danach kann der axiale IST-Abstand des Receivers von der Radfelge gemessen und eine evtl. Differenz zum SOLL-Abstand ermittelt werden. Anschließend kann bedarfsweise der gewünschte axiale Abstand des Receivers von der Radfelge durch Verstellen des Stellkörpers am Adapter um die ermittelte Differenz oder einen anderen Wert eingestellt werden. Zum Verstellen des Stellkörpers kann der Receiver von der Fixiervorrichtung, insbesondere vom Adapter, abgenommen und anschließend auf der Fixiervorrichtung wieder montiert werden.

Die beschriebenen und beanspruchten Vorrichtungsmerkmale können mit Vorteil beim beanspruchten Verfahren eingesetzt werden. Umgekehrt können auch die beschriebenen und beanspruchten Verfahrensmerkmale vorteilhafterweise bei der/den beanspruchten Vorrichtung(en) eingesetzt werden.

In den Unteransprüchen sind weitere vorteilhafte Ausgestaltungen der Erfindung angegeben.

Die beanspruchte Wegfahrsperre kann folgende vorteilhafte Ausgestaltungen umfassen, die jeweils einzeln oder in Kombination vorgesehen und genutzt werden können.

Das Ersatz-Befestigungsmittel kann einen Korpus aufweisen, der ein Radbefestigungselement, insbesondere einen Radschraubbolzen, ein Betätigungselement und ein Verbindungselement, insbesondere eine Schrauböffnung, des Verbindungsmittels zur Adapterverbindung umfasst. Dabei kann das Betätigungselement als Außensechskant ausgebildet und an einem hohlen Ansatz des Korpus angeordnet sein, wobei das Verbindungselement am Ansatz angeordnet ist.

Der Adapter kann einen bevorzugt stangenartig ausgebildeten Schaft aufweisen, an dem einerseits ein Verbindungselement, insbesondere ein Schraubzapfen, des Verbindungsmittels, und an dem andererseits das erste Riegelelement angeordnet sind. Das Verbindungselement und das erste Riegelelement sind bevorzugt an verschiedenen Endbereichen des Adapters angeordnet.

Die Stelleinrichtung kann einen axial beweglich am Adapter gelagerten Stellkörper mit dem ersten Riegelelement umfassen. Die Stelleinrichtung kann zudem eine Bewegungseinrichtung, insbesondere eine Stellverschraubung, umfassen, die zur axiale Verstellung des Stellkörpers am Adapter ausgebildet ist. Der Stellkörper kann mutterartig ausgebildet sein, wobei die Stellverschraubung einen Gewindeabschnitt am Schaft des Adapters und einen Gewindeabschnitt am Stellkörper umfassen kann.

Das am Adapter, insbesondere an einem axial beweglich am Adapter gelagerten Stellkörper der Stelleinrichtung, angeordnete erste Riegelelement kann als Vorsprung oder Vertiefung für einen formschlüssigen Eingriff mit dem weiteren, komplementär ausgestalteten, Riegelelement am Receiver ausgebildet sein. Das weitere Riegelelement kann versenkt im Receiver gelagert sein. Es kann dabei eigenständig und quer zur Längsache des Adapters beweglich gelagert sein.

Die Riegeleinrichtung kann einen Riegelaktor umfassen, der dazu ausgebildet ist, die Riegelelemente in und außer Eingriff zu bringen. Der Riegelaktor kann an der Sicherungseinrichtung insbesondere an einem Schloss der Sicherungseinrichtung, ausgebildet sein.

Die Sperrvorrichtung kann ein die Wegfahrbewegung des Fahrzeugrads sperrendes Sperrmittel aufweisen. In der Montagestellung können das Sperrmittel und die seitlich hiervon distanzierte Fixiervorrichtung gemeinsam am Receiver angeordnet sein und können sich in die gleiche axiale Richtung zur Radfelge erstrecken.

Der Receiver kann im Bodenbereich eine Durchgangsöffnung und im Innenraum eine stirnseitig offene Führungshülse für den Adapter, insbesondere für den Stellkörper, aufweisen. Die Führungshülse kann am anderen Stirnende einen Hülsenboden und am Mantel eine seitliche Durchtrittsöffnung für das weitere Riegelelement aufweisen. In Anschlagstellung des Adapters, insbesondere Stellkörpers, am Hülsenboden können die Riegelelemente in eingriffsfähiger Relativstellung zueinander angeordnet sein.

Die Wegfahrsperre für ein Fahrzeugrad eines Strassenfahrzeugs kann nach dem vorgenannten weiteren und eigenständigen Erfindungsaspekt folgende Ausgestaltung haben. Die Wegfahrsperre umfasst eine die Wegfahrbewegung des Fahrzeugrads verhindernde Sperrvorrichtung mit einem gehäuseartigen Receiver und eine Fixiervorrichtung, welche dazu ausgebildet ist, die Sperrvorrichtung an einer drehbaren Radfelge des Fahrzeugrads lösbar und sicherbar zu fixieren, wobei die Fixiervorrichtung ein Ersatz-Befestigungsmittel, eine Riegeleinrichtung und eine Sicherungseinrichtung umfasst, wobei das Ersatz-Befestigungsmittel ausgebildet ist für die Befestigung der Radfelge am Strassenfahrzeug, insbesondere an einer Radnabe, und wobei die Riegeleinrichtung zusammenwirkende und von der Sicherungseinrichtung beaufschlagbare Riegelelemente aufweist, die in Eingriffsstellung ein Entfernen der Sperrvorrichtung vom Fahrzeugrad verhindern. Der gehäuseartige Receiver weist einen hohlen Innenraum auf, der zumindest bereichweise mit einer Füllung aus einem Antisabotage-Material, insbesondere Korrund, versehen ist.

Die Erfindung ist in den Zeichnungen beispielhaft und schematisch dargestellt. Im einzelnen zeigen
- Figur 1:: ein Straßenfahrzeug mit einem Fahrzeugrad und einer angebauten Wegfahrsperre,
- Figur 2:: eine perspektivische Darstellung des Fahrzeugrads und der Wegfahrsperre in einer teilweise montierten Stellung,
- Figur 3:: eine Draufsicht der Wegfahrsperre in Anbaustellung an einer geschnitten dargestellten Radfelge,
- Figur 4:: die Wegfahrsperre von Figur 1-3 in einer Explosionsdarstellung,
- Figur 5:: eine perspektivische Bodenansicht der Wegfahrsperre gemäß Pfeil V von Figur 4,
- Figur 6:: eine Seitenansicht der Wegfahrsperre gemäß Pfeil VI von Figur 5,
- Figur 7:: einen Querschnitt durch die Wegfahrsperre in montierter Stellung,
- Figur 8 bis 10:: ein Ersatz-Befestigungsmittel und ein Adapter in verschiedenen Ansichten und Relativstellungen,
- Figur 11:: eine geschnittene und vergrößerte Detaildarstellung des Ersatz-Befestigungsmittels und des Adapters sowie der Riegeleinrichtung in Montagestellung am Receiver,
- Figur 12 und 13:: verschiedene Anbaustellungen der Wegfahrsperre am Fahrzeugrad mit unterschiedlichen axialen Abständen (a),
- Figur 14 bis 17:: verschiedene weitere Varianten des Ersatz-Befestigungsmittels in Seitenansicht und im Längsschnitt,
- Figur 18 bis 20:: verschiedene perspektivische und geschnittene Darstellungen eines Deckels des Receivers
- Figur 21:: einen mehrlagigen Boden und eine Führung des Receivers in einer Explosionsdarstellung und
- Figur 22 bis 30:: den Anbau der Wegfahrsperre an einem Fahrzeugrad in mehreren Schritten.

Die Erfindung betrifft eine Wegfahrsperre (1) für ein Fahrzeugrad (2) eines Straßenfahrzeugs (3). Die Erfindung betrifft auch ein Verfahren zum Anbau der Wegfahrsperre (1) an einem Fahrzeugrad (2).

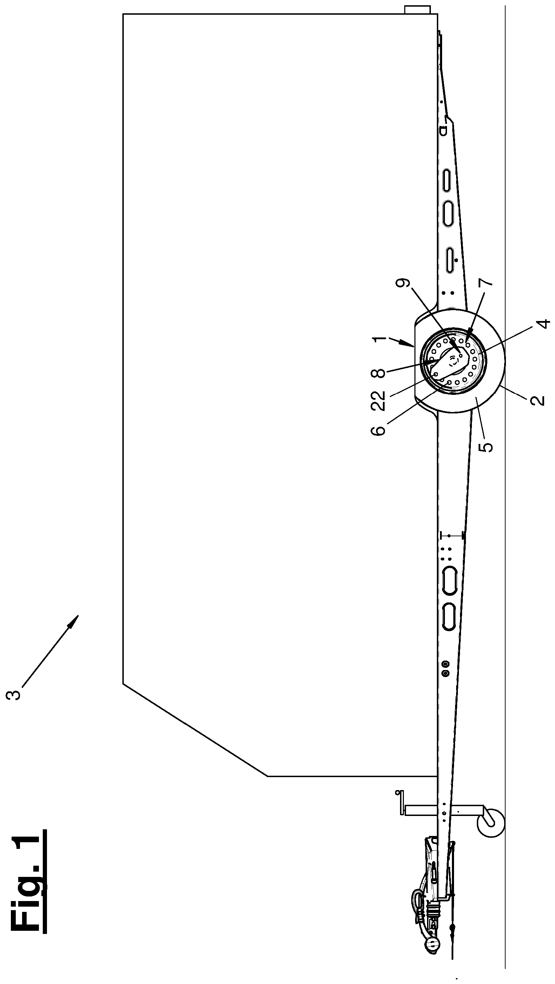

Figur 1 zeigt in einer Seitenansicht ein Straßenfahrzeug (3), welches z.B. als Fahrzeuganhänger ausgebildet ist. Dieser umfasst ein Chassis mit zwei oder mehr Fahrzeugerädern (2), einen Aufbau und eine Zugkupplung. Die Fahrzeugräder (2) weisen jeweils eine drehend am Straßenfahrzeug (3) gelagerte Radfelge (4) mit einem aufgezogenen Reifen (5) auf.

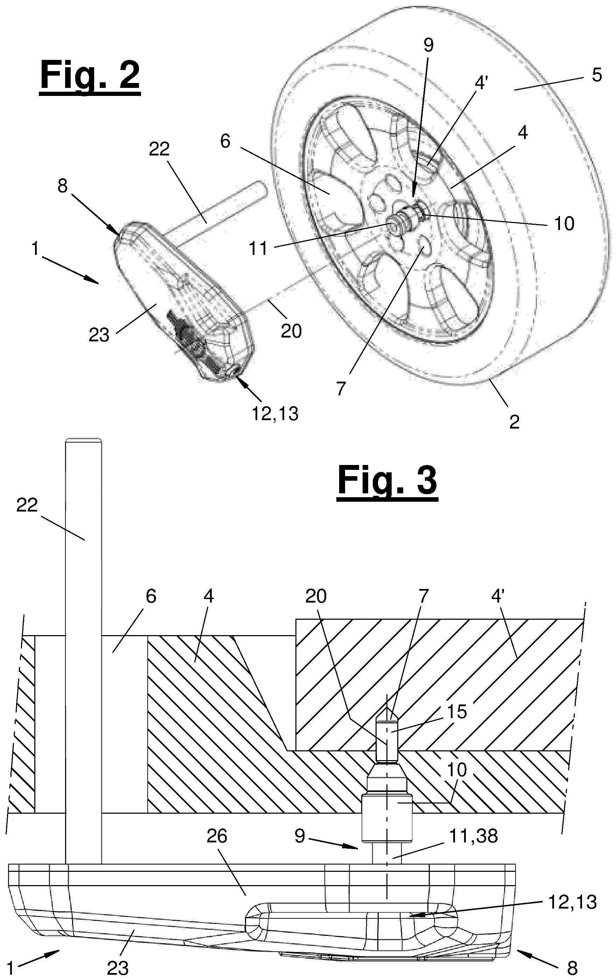

Die Radfelge (4) wird mit einer Radbefestigung (7), z.B. einer Radschaube oder Radmutter, an einer drehbaren und in Figur 2 und 3 angedeuteten Radnabe (4') befestigt. Die Radnabe (4') kann z.B. an einem Radschwinghebel einer gefederten Radlenkerachse montiert sein. Die Radfelge (4) kann mehrere Felgenöffnungen (6) aufweisen. Figur 1 zeigt z.B. eine Stahlfelge mit einem Kranz von relativ kleinen Felgenöffnungen (6). In Figur 2 ist eine andere Radfelge (4) in Form einer Leichtmetallfelge dargestellt, die größere Felgenöffnungen (6) aufweist.

Figur 1 zeigt in der Seitenansicht eine Wegfahrsperre (1) in der Anbaustellung am Fahrzeugrad (2). Die umfasst eine Sperrvorrichtung (8) und eine Fixiervorrichtung (9), mit welcher die Sperrvorrichtung (8) an der drehbaren Radfelge (4) in der gezeigten Anbaustellung lösbar und sicherbar fixiert werden kann. Figur 2 zeigt die Wegfahrsperre (1) in einer vom Fahrzeugrad (2) demontierten Stellung der Sperrvorrichtung (8).

Die Wegfahrsperre (1) umfasst einen gehäuseartigen Receiver (23) und ein Sperrmittel (22), welches in Anbaustellung der Wegfahrsperre (1) eine Wegfahrbewegung des Fahrzeugrads (2) verhindert.

Die Fixiervorrichtung (9) umfasst ein Ersatz-Befestigungsmittel (10), einen länglichen Adapter (11), eine Riegeleinrichtung (12) und eine Sicherungseinrichtung (13). Das Ersatz-Befestigungsmittel (10) dient z.B. zur Befestigung der Radfelge (4) am Straßenfahrzeug (3), insbesondere an der Radnabe (4'). Das Ersatz-Befestigungsmittel (10) kann für den Anbau der Wegfahrsperre (1) am Fahrzeugrad (2) gegen eine vorhandene normale Radbefestigung (7) getauscht werden. Die Riegeleinrichtung (12) umfasst relativ zueinander bewegbare Riegelelemente (44,45), von denen ein erstes Riegelelement (44) an der Fixiervorrichtung (9), insbesondere am Adapter (11), und ein weiteres Riegelelement (45) an der Sperrvorrichtung (8), insbesondere am Receiver (23), angeordnet ist.

Die Sperrvorrichtung (8) insbesondere der Receiver (23), kann auf der Fixiervorrichtung (9), insbesondere dem Adapter (11), formschlüssig aufgesetzt und geführt sowie durch die geschlossene Riegeleinrichtung (12) und die Sicherungseinrichtung (13) fixiert werden und gegen unbefugtes Entfernen gesichert werden. In einer bevorzugten Ausführung kann außerdem der axiale Abstand (a) des Receivers (23) von der Radfelge (4) eingestellt und insbesondere minimiert werden.

Der längliche Adapter (11) kann durch ein Verbindungsmittel (18), vorzugsweise ein Schraubmittel, mit dem freien Endbereich (21) des Ersatz-Befestigungsmittels verbunden werden. Der Adapter (11) bildet in der gezeigten Ausführungsform eine axiale Verlängerung des Ersatz-Befestigungsmittels (10) in Richtung der Längsachse (20) der Fixiervorrichtung (9). Die Längsachse (20) verläuft parallel zur Radachse bzw. Drehachse des Fahrzeugrads (2).

Die relativ zueinander beweglichen Riegelelemente (44,45) können in einer bevorzugt formschlüssigen Eingriffstellung ein Entfernen der Sperrvorrichtung (8) vom Fahrzeugrad (2) verhindern. Die Riegelelemente (44,45) können von der Sicherungseinrichtung (13) beaufschlagt und in gegenseitigen Riegeleingriff gebracht werden sowie hieraus wieder gelöst werden. Bei geöffneter Riegeleinrichtung (12) kann die Sperrvorrichtung (8) von der Fixiervorrichtung (9) getrennt und vom Fahrzeugrad (2) abgenommen werden.

Wie Figur 3 in einer teilweise geschnittenen Draufsicht der Anbaustellung der Wegfahrsperre (1) verdeutlicht, kann das Sperrmittel (22) z.B. als gerade Sperrstange ausgebildet sein, die an ihrem einen Ende am Receiver (23) verstellbar über eine Führung (27) einstellbar und befestigbar ist und die in Anbaustellung durch eine Felgenöffnung (6) greift. Am freien Ende ragt die Sperrstange (22) über das Fahrzeugrad (2) hinaus und schlägt bei einer eventuellen Raddrehung an einem festen Fahrzeugteil, z.B. am Radschwinghebel, an. Der mögliche Winkel der Raddrehung wird dadurch begrenzt und die Wegfahrbewegung des Fahrzeugrads (2) verhindert.

Das Sperrmittel (22) kann alternativ in anderer Weise ausgebildet sein, wobei es z.B. den Reifen (5) außenseitig und mit dem besagten Überstand am freien Ende umgreift. Der Sperrmittel (22) kann in einer anderen Variante auch einen Stützkontakt mit dem Boden bzw. Untergrund herstellen und dadurch die mögliche Raddrehung begrenzen sowie die Wegfahrbewegung des Fahrzeugrads (2) verhindern oder zumindest erschweren.

Die Sperrvorrichtung (8) und die Fixiervorrichtung (9) können aus verschiedenen und voneinander trennbaren Teilen bestehen, die für den Anbau der Wegfahrsperre (1) am Fahrzeugrad (2) aneinander montiert und dann gemeinsam an der Radfelge (4) bzw. an der Radnabe (4') fixiert werden können. Figur 3 zeigt diese Montagestellung der Fixiervorrichtung (9) und der Sperrvorrichtung (8) sowie die Anbaustellung am Fahrzeugrad (2).

In der Montagestellung sind das Sperrmittel (22) und die seitlich hiervon distanzierte Fixiervorrichtung (9) gemeinsam am Receiver (23) angeordnet und erstrecken sich in die gleiche axiale Richtung zur Radfelge (4). Das Sperrmittel (22) und die Fixiervorrichtung (9) werden vom Receiver (23) miteinander verbunden und in Axialrichtung überdeckt. Der Receiver (23) ragt an seinen äußeren Rändern in mehreren Richtungen seitlich über das Sperrmittel (22) und die Fixiervorrichtung (9) hinaus.

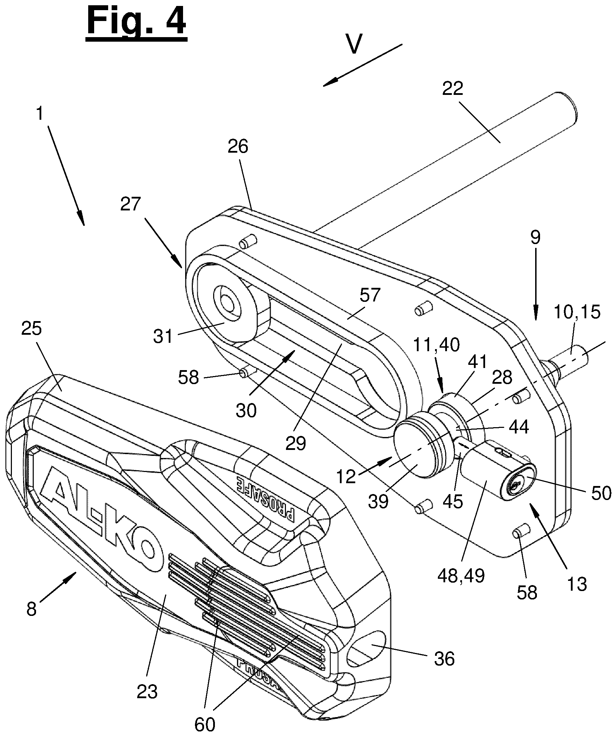

Der Receiver (23) ist gehäuseartig ausgebildet und weist einen bevorzugt hohlen Innenraum (26) auf. Der Receiver (23) kann in der nachfolgend erläuterten Weise einen Boden (24) und einen Deckel (25) umfassen. Diese sind in der Explosionsdarstellung von Figur 4 gezeigt.

Wie Figur 4 verdeutlicht, ist ein erstes Riegelelement (44) am Adapter (11) angeordnet. Ein weiteres Riegelelement (45) ist an der Sperrvorrichtung (8) angeordnet. Es befindet sich z.B. im Innenraum (26) des Receivers (23). Das weitere Riegelelement (45) ist am Receiver (23) axial in Richtung der Längsachse (20) festgelegt und kann mittels der Sicherungseinrichtung (13) in Pfeilrichtung quer zum Adapter (11) und zur Längsachse (20) bewegt werden. Es kann in sicherbaren, bevorzugt formschlüssigen, Eingriff mit dem ersten Riegelelement (44) gebracht und hieraus wieder entfernt werden. Die Sicherungseinrichtung (13) kann einen Riegelaktor (48) und ein Schloss (49) umfassen.

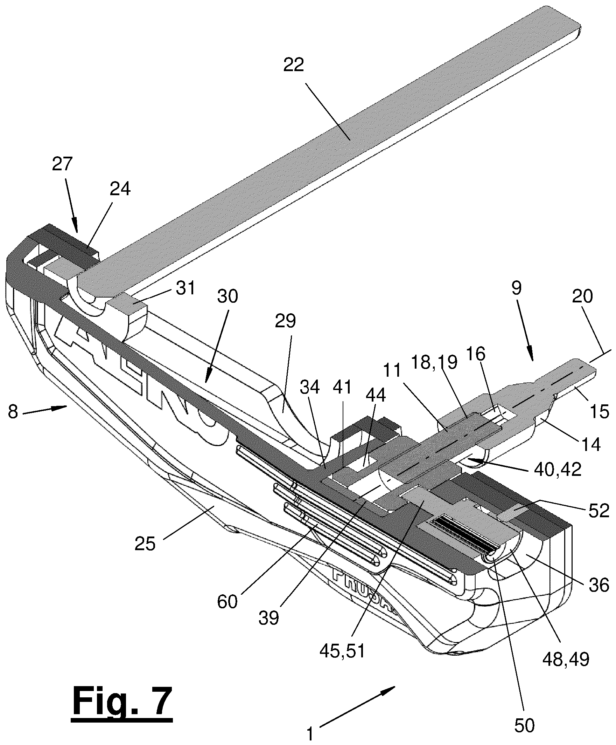

Gemäß Figur 7 und 11-13 ist das weitere Riegelelement (45) z.B. als Riegelstift (47) ausgebildet. Es befindet sich am Ende eines Stellers oder Schiebers (51) des Riegelaktors (48) und kann hierüber quer zur Längsachse (20) vorgeschoben und zurückgezogen werden. Das Schloss (49) umfasst ein Gehäuse, welches in einer Aufnahmeöffnung (36) des Receivers (23) seitlich von außen zugänglich angeordnet ist. Die Aufnahmeöffnung (36) ist quer zum Adapter (11) und zur Längsachse (20) ausgerichtet. Die Öffnungswandung verhindert eine axiale Bewegung des weiteren Riegelelements (45) in Richtung der Längsachse (20) .

Eine Lagesicherung (52), z.B. ein Sicherungsstift, sichert die Schlosslage in der Aufnahmeöffnung (36). Das Schloss (49) umfasst z.B. einen Schließzylinder (50), der mit einem Schlüssel, einem Code oder in anderer Weise gesperrt und entsperrt werden kann und der die Bewegung des Stellers (51) und des Riegelelements (45) bzw. Riegelstifts (47) freigeben und blockieren kann. Der Schließzylinder (50) kann z.B. mit dem Steller (51) und dem weiteren Riegelelement (45) zu einer Baueinheit verbunden sein und kann in der Aufnahmeöffnung (36) als Ganzes zwischen einer vorderen Riegelstellung und einer zurückgezogenen Entriegelungsstellung bewegt werden.

Das erste Riegelelement (44) ist beweglich am Adapter (11) gelagert und kann mittels einer Stelleinrichtung (40) längs des Adapters (11) und der Achse (20) bewegt und verstellt werden. Hierüber kann der axiale Abstand des ersten Riegelelements (44) zum Ersatz-Befestigungsmittel (10) verstellt werden. Wie Figur 7 und 11-13 verdeutlichen, kann der Receiver (23) mittels der Riegeleinrichtung (12) lösbar an der Fixiervorrichtung (9) montiert werden. In den gezeigten Montagestellungen sind die Riegelelemente (44,45) und ihre Eingriffstellung geschützt im hohlen Innenraum (26) des Receivers angeordnet.

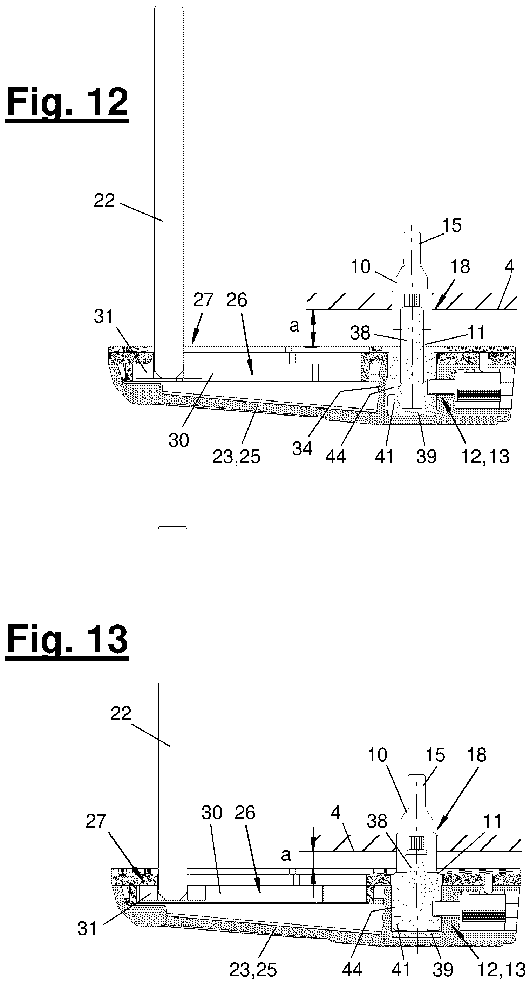

Die Fixiervorrichtung (9) ist verstellbar ausgebildet, um die Sperrvorrichtung (8), insbesondere den Receiver (23), in einem einstellbaren axialen Abstand (a) an der Radfelge (4) montieren zu können. Dieser axiale Abstand (a) kann durch eine Verstellung des ersten Riegelelements (44) am Adapter (11) eingestellt werden. Figur 12 und 13 zeigen verschiedene Einstellungen und Abstände (a).

Wie die Schnittdarstellungen von Figur 7 und 11-13 verdeutlichen, weist der Adapter (11) einen bevorzugt stangenartigen Schaft (38) auf. An dessen einem Endbereich ist ein Verbindungselement (37) angeordnet, das z.B. als Schraubzapfen ausgebildet ist und mit dem Verbindungselement (19), z.B. einer Schrauböffnung, am Ersatz-Befestigungselement (10) zusammenwirkt. Die Verbindungselement (19,37) bilden zusammen das besagte Verbindungsmittel (18), insbesondere Schraubmittel.

Am anderen Endbereich des Adapters (11) ist das erste Riegelelement (44) in der besagten Weise verstellbar angeordnet. Die Stelleinrichtung (40) umfasst einen axial beweglich am Adapter (11) gelagerten Stellkörper (41), an dem das erste Riegelelement (44) angeordnet ist. Der Stellkörper (41) hat z.B. außenseitig eine zylindrische Grundform, wobei das erste Riegelelement (44) z.B. als Ringnut (46) am Außenumfang des Stellkörpers (41) ausgebildet und angeordnet ist. Intern kann der Stellkörper (41) eine axiale Durchgangsbohrung für die Lagerung am einsteckbaren Schaft (38) des Adapters (11) aufweisen. Die axiale Durchgangsbohrung kann am freien Ende mit einer Kappe (39) verschlossen werden. Die Kappe (39) kann einen Aufbohrschutz bilden.

Die Stelleinrichtung (40) kann eine Bewegungseinrichtung (42), insbesondere eine Stellverschraubung, umfassen, die zur axialen Verstellung des Stellkörpers (41) am Adapter (11) ausgebildet ist. Die Stellverschraubung kann kämmende Gewindeabschnitte am Schaft (38) und an der Durchgangsbohrung des mutterartig ausgebildeten Stellkörpers (41) umfassen. Der Stellkörper (41) kann teilweise gemäß Figur 12 oder im Wesentlichen vollständig gemäß Figur 7 und 13 auf den Schaft (38) geschraubt werden.

Der Schaft (38) kann als Gewindestange ausgebildet sein. Die Gewindeabschnitte der Stellverschraubung und des Verbindungselements (37) können ineinander übergehen. Die axialen Längen des Schafts (38) und des Stellkörpers (41) sowie ihrer Gewindeabschnitte können aufeinander abgestimmt sein. Bei der im Wesentlichen vollständigen Aufschraubstellung kann der Stellkörper (41) gemäß Figur 13 am Ersatz-Befestigungselement (10) anschlagen. Die Anschlagstelle und der freie Endbereich (21) des Ersatz-Befestigungselement (10) können sich dabei geschützt nahe an oder auch in dem Receiver (23) befinden.

Der Receiver (23) kann eine definierte, bevorzugt formschlüssige, Aufnahme für den Stellkörper (41) und die Riegelelemente (44,45) aufweisen. Die Aufnahme ist vorzugsweise im hohlen Innenraum (26) des gehäuseartigen Receivers (23) angeordnet. In der Montagestellung ist durch diese Aufnahme die Relativposition von Receiver (23) und Fixiervorrichtung (9) festgelegt. Durch diese Aufnahme kann bei einem axialen Verstellen des Stellkörpers (41) der Receiver (23) entsprechend mitverstellt werden. Mit einer Verstellung des axialen Abstands des Stellkörpers (41) vom Ersatz-Befestigungsmittel (10) ändert sich entsprechend auch der axiale Abstand (a) der Bodenseite des Receivers (23) von der Radfelge (4). Figur 12 und 13 zeigen diese Abstandsänderungen.

Die Aufnahme wird z.B. durch eine stirnseitig offene Führungshülse (34) für den Adapter, insbesondere den Stellkörper (41), gebildet. Die Führungshülse (34) ist im Innenraum (26) angeordnet. Sie ist längs der Achse (20) ausgerichtet und weist an der offenen Stirnseite eine Einführöffnung (35) für den Stellkörper (41) auf. Im Bodenbereich weist der Receiver (23) eine Durchgangsöffnung (28) für den Adapter (11) und den Stellkörper (41) auf. Der Adapter (11) und der Stellkörper (41) können dadurch in der Montagestellung in den Innenraum (26) und in die Führungshülse (34) eintauchen.

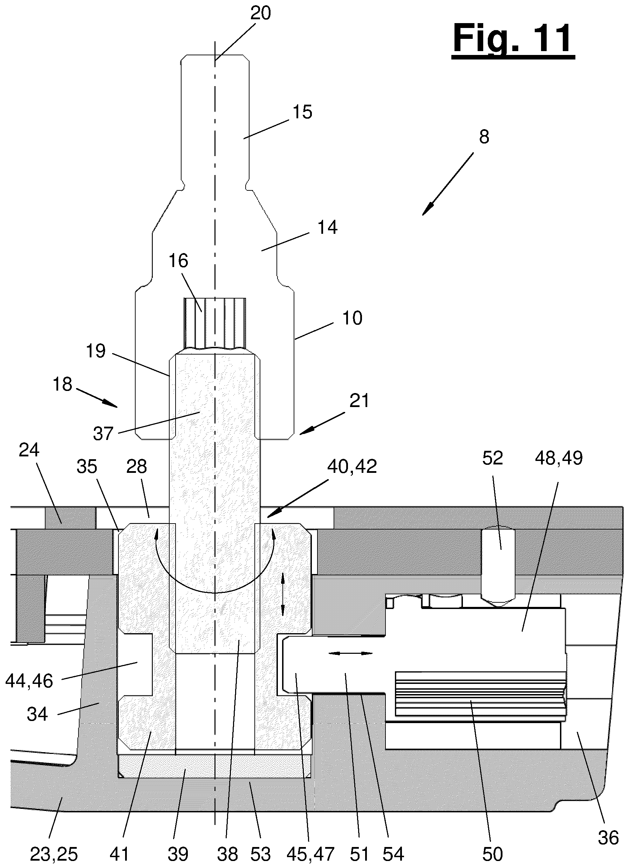

Die Führungshülse (34) kann den Stellkörper (41) formschlüssig aufnehmen und hat eine an dessen Mantel angepasste und z.B. zylindrische Innenkontur. Die Führungshülse (34) weist am anderen Stirnende einen Hülsenboden (53) auf. Außerdem weist sie am Mantel eine seitliche Durchtrittsöffnung (54) für das weitere Riegelelement (45) auf. Figur 7 und 11 zeigen diese Ausbildung. Der Stellkörper (41) kann direkt oder mittels der Kappe (39) am Hülsenboden (53) anschlagen. In dieser Anschlagsstellung fluchten die Riegelelemente (44,45) in Verriegelungsrichtung quer zur Längsachse (20) und nehmen eine eingriffsfähige Relativstellung zueinander ein. In der in Figur 11 gezeigten Eingriffsstellung oder Verriegelungsstellung ist das weitere Riegelelement (45) durch die spielarme Durchtrittsöffnung (54) gegen Axialkräfte abgestützt.

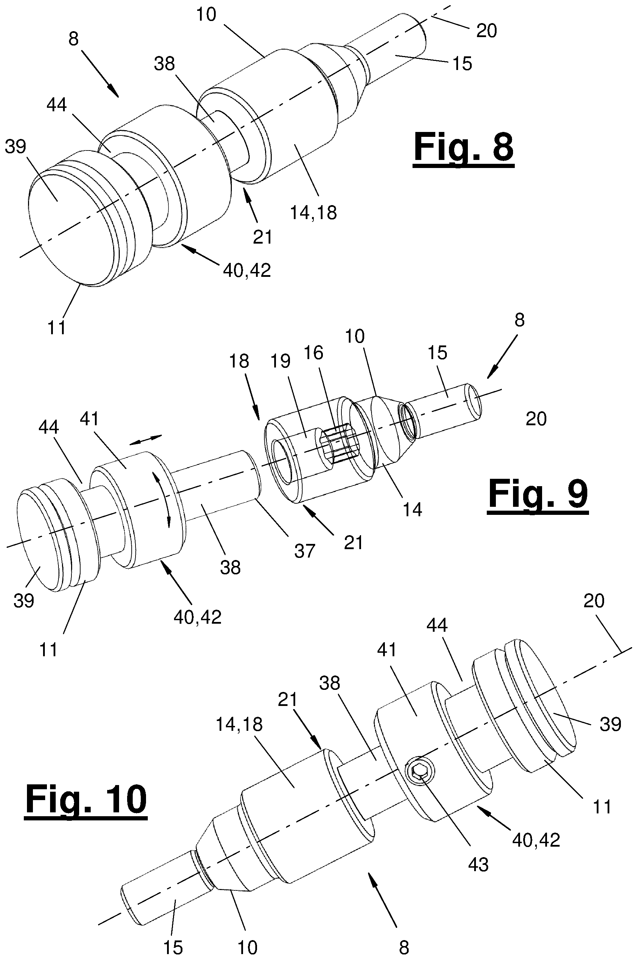

Figur 8-10 verdeutlichen beispielhaft und in verschiedenen Ansichten eine Ausbildung des Ersatz-Befestigungsmittels (10) und des Adapters (11).

Das Ersatz-Befestigungsmittel (10) umfasst einen Korpus (14) mit einem Radbefestigungselement (15), einem Betätigungselement (16) und dem besagten Verbindungselement (19) des Verbindungsmittels (18) zur Adapterverbindung. Das Radbefestigungselement (15) ist z.B. als Radschraubbolzen ausgebildet und kann im Austausch gegen die normale Radbefestigung (7) in eine Gewindebohrung der Radnabe (4') eingeschraubt werden. Das Radbefestigungselement (15) kann an das eine Ende des Korpus (14) angeformt sein. Zwischen dem z.B. im wesentlichen außenseitig zylindrischen Korpus (14) und dem Radbefestigungselement (15) kann ein z.B. konisch oder kugelschalenförmiger Übergang angeordnet sein. Dieser kann an die Gestaltung der Durchgangsbohrung in der Radfelge (4) angepasst sein. Der Außenumfang des Korpus (14) kann ebenfalls an diese Durchgangsbohrung der Radfelge (4) angepasst sein.

Das Betätigungselement (16) dient zur Befestigung, insbesondere zum Einschrauben, des Ersatz-Befestigungsmittels (10) an der Radnabe (4'). Das Betätigungselement (16) kann z.B. als Sechskant für ein entsprechendes Betätigungswerkzeug ausgebildet sein. Das Verbindungselement (19) ist in den gezeigten Ausführungsbeispielen als Schrauböffnung gestaltet, die axial im Korpus (14) angeordnet ist und an dessen freiem Endbereich (21) mündet. Wie Figur 9 in der Explosionsdarstellung zeigt, kann das Betätigungselement (16) als Innensechskant ausgebildet und im Korpus (14) versenkt sowie in Axialrichtung unterhalb des Verbindungselements (19) angeordnet sein. Das Verbindungselement (19) kann dabei einen größeren Durchmesser als der Innensechskant aufweisen.

Wie Figur 10 verdeutlicht, kann die Stelleinrichtung (40) ein stellbares Arretiermittel (43) aufweisen, das zur Arretierung des Stellkörpers (41) auf dem Adapter (11), insbesondere auf dessen Schaft (38), ausgebildet ist. Das Arretiermittel (43) dient dabei auch zur Arretierung des ersten Riegelelements (44) im gewünschten axialen Abstand zum Ersatz-Befestigungsmittel (10). Das Arretiermittel (43) kann z.B. als radialer Schraubstift ausgebildet sein. Es kann in Arretierstellung auf die im gegenseitigen Eingriff befindlichen Gewindeabschnitte des Stellkörpers (41) und des Schafts (38) einwirken. Das Arretiermittel (43) kann auch in anderer Weise ausgebildet und angeordnet sein.

Figur 9 verdeutlicht außerdem, wie durch eine Drehbewegung des Stellkörpers (41) auf dem Schaft (38) eine axiale Stellkörperbewegung erzeugt werden kann. Über die Gewindesteigung stehen der Drehwinkel und der axiale Verstellweg in einem definierten Verhältnis zueinander. Der gewünschte axiale Stellweg kann durch einen entsprechenden Drehwinkel und ggf. mehrere Umdrehungen des Stellkörpers (41) eingestellt werden.

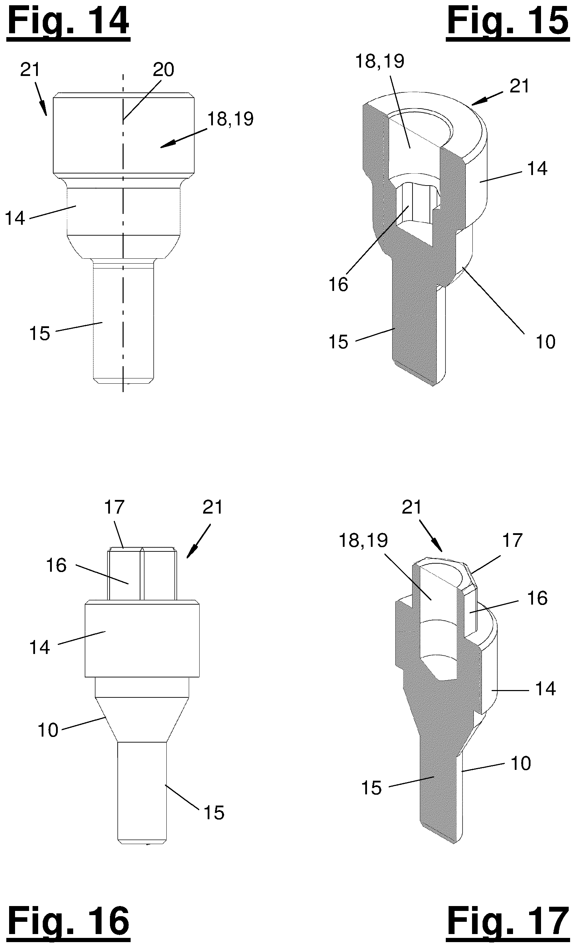

Figur 14-17 zeigen weitere Varianten des Ersatz-Befestigungsmittels (10). Bei Figur 14 und dem Längsschnitt von Figur 15 ist ein Korpus (14) mit einem kugelschalenförmigen Übergang zum Radbefestigungselement (15) dargestellt. Hierbei ist außerdem ersichtlich, dass der Korpus (14) innen- und außenseitig abgestufte Durchmesser aufweisen kann. Im kleineren Durchmesserbereich ist der versenkte Innensechskant (16) angeordnet. Im verbreiterten Korpusbereich befindet sich das Verbindungselement (19). Die vorgeschriebene Variante von Figur 8-10 kann eine entsprechende Ausbildung haben.

Bei der Variante von Figur 16 und 17 ist das Betätigungselement (16) als Außensechskant ausgebildet. Es befindet sich an einem axialen Ansatz (17), der außenseitig auf dem Korpus (14) angeordnet ist. Der Ansatz (17) kann innenseitig hohl ausgebildet sein und nimmt das z.B. als Schrauböffnung ausgebildete Verbindungselement (19) auf.

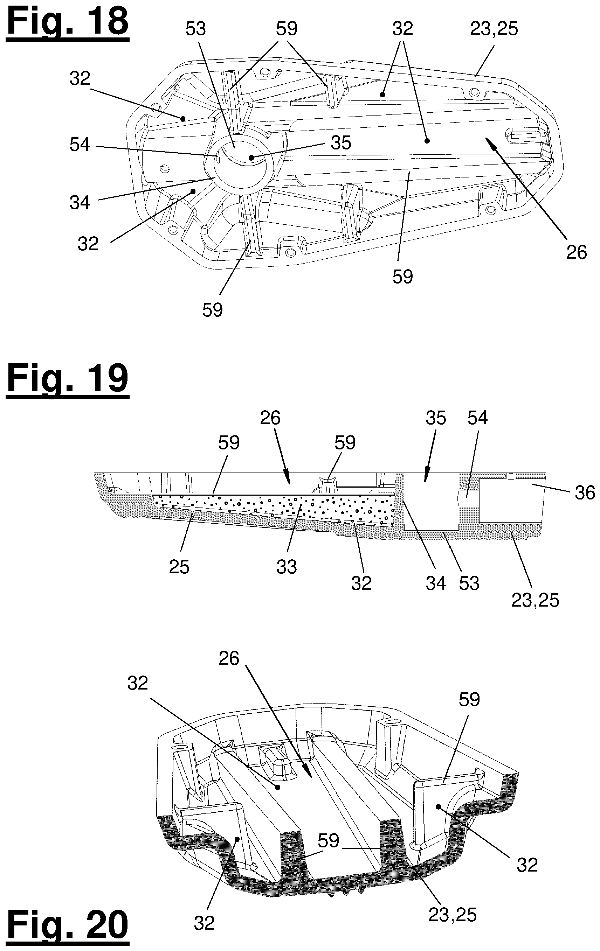

Wie Figur 4 in der Explosionsdarstellung sowie Figur 18-21 verdeutlichen, kann der gehäuseartige Receiver (23) einen Boden (24) und einen schalenartigen Deckel (25) umfassen. Diese können in geeigneter Weise, beispielsweise durch geeignete Fixiermittel (58), z.B. Schrauben, fest miteinander verbunden werden. Der Boden (24) weist eine Durchgangsöffnung (28) für den Adapter (11) und dessen Stellkörper (41) sowie eine schlüssellochartige Durchlassöffnung (29) für das Sperrmittel (22) auf. Die Durchgangsöffnung (28) fluchtet mit der vorgenannten Einführöffnung (35) der Führungshülse (34). Die Führungshülse (34) kann gemäß Figur 18 am Deckel (25) innenseitig angeordnet, insbesondere angeformt sein. Der schalenförmige Deckel (25) kann ansonsten innenseitig rippenartige Längs- und Querstege (59) zur Versteifung aufweisen. Außenseitig kann der Deckel (25) gemäß Figur 4 und 7 im Überdeckungsbereich der montierten Fixiervorrichtung (9) versteifende, abstehende Rippen (60) aufweisen, welche die Sabotagesicherheit erhöhen können.

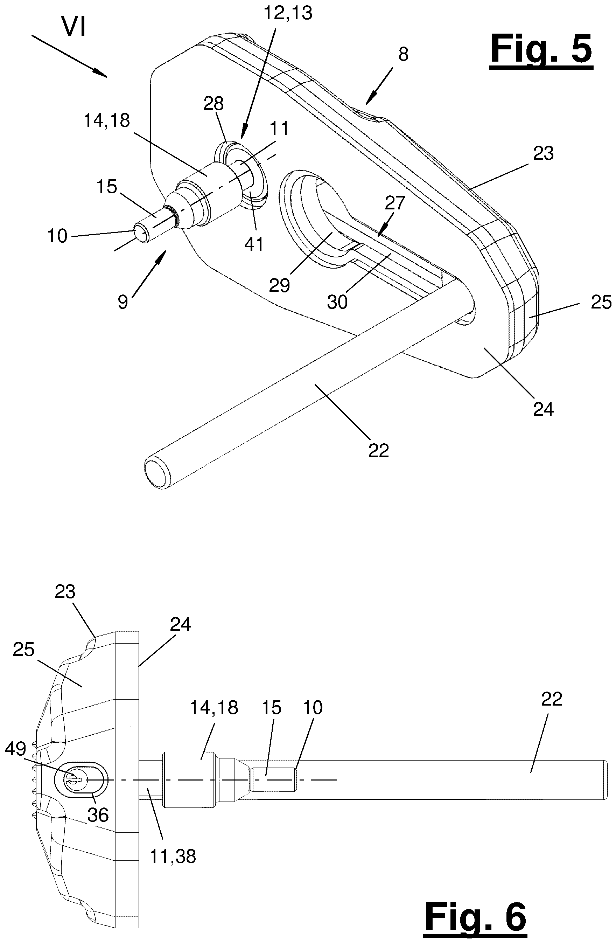

Wie Figur 4-7 und 21 verdeutlichen, kann der Receiver (23) im Innenraum (26) eine Führung (27) für das Sperrmittel (22) aufweisen. Das Sperrmittel (22) kann z.B. die vorgenannte gerade Sperrstange und außerdem ein endseitiges Führungselement (31) aufweisen, welches z.B. als ring- oder scheibenartige Verbreiterung des Sperrstangenendes ausgebildet ist. Die schlüssellochartige Durchlassöffnung (29) weist einen geraden und schlitzartigen sowie an den Sperrstangendurchmesser angepassten Öffnungsbereich auf. Dieser Öffnungsbereich geht am Ende in einen im Durchmesser verbreiterten und an die Form und den Durchmesser des Führungselements (31) angepassten und z.B. kreisrunden Öffnungsbereich über. Hier kann das Sperrmittel (22) mit dem Führungselement (31) in den Innenraum (26) eingeführt werden. Die Durchlassöffnung (29) erstreckt sich z.B. hauptsächlich quer zur Längsachse (20). Das Sperrmittel (22) und das Ersatz-Befestigungsmittel (10) sowie der Adapter (11) können in Längsrichtung des länglichen Receiver (23) gesehen auf gleicher Höhe angeordnet sein.

Die Führung (27) umfasst ferner einen im Innenraum (26) ausgebildeten Führungskanal (30). Dieser wird zwischen dem Boden (24) und einer innenseitigen Führungskulisse (57) gebildet und kann an den Durchmesser des bevorzugt ringscheibenförmigen Führungselements (31) angepasst sein. Der schmale, schlitzartige Öffnungsbereich der Durchlassöffnung (29) ist in seiner Weite kleiner als der Außendurchmesser des Führungselements (31) und stützt dieses in Axialrichtung ab.

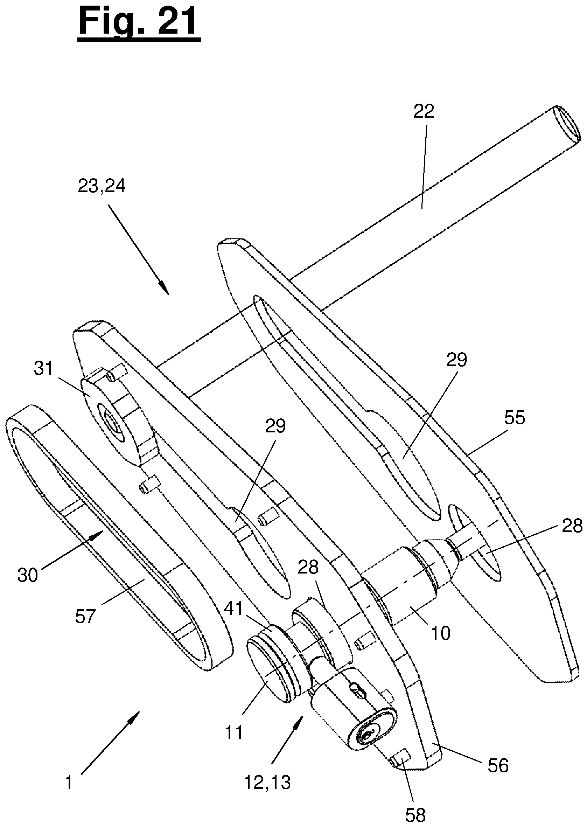

Der Boden (24) kann einlagig oder mehrlagig ausgebildet sein. Figur 21 verdeutlicht eine mehrlagige Ausbildung. Der Boden (24) umfasst dabei eine Außenplatte (55) sowie eine parallele Innenplatte (56), welche beide die besagten Durchgangsöffnungen (28) und Durchlassöffnungen (29) aufweisen. Die Außen- und Innenplatte (55,56) können planparallel aneinander liegen und können durch die besagten Fixiermittel (58) fest miteinander verbunden werden. Die Führungskulisse (57) kann an der Innenseite der Innenplatte (56) angeordnet und z.B. befestigt sein.

Wie Figur 18-20 verdeutlichen, kann der schalenförmige Deckel (25) innenseitig mehrere aussteifende Quer- und/oder Längsstege (59) aufweisen. Längsstege können z.B. zur Abstützung der Führungskulisse (57) dienen. Figur 19 zeigt dabei einen zentralen Längsschnitt des Deckels (25).

Durch die besagten Längs- und/oder Querstege (59) können gemäß Figur 18 im schalenartigen Deckel (25) mehrere vertiefte bzw. hohle Deckelkammern (32) gebildet werden, die ggf. gegeneinander durch die besagten Stege (59) abgeschottet sind.

In einer oder mehreren dieser Deckelkammern (32) kann sich eine in Figur 19 gezeigte Füllung (33) aus einem Antisabotage-Material befinden. Dieses Material besteht z.B. aus Korund oder einem anderen abrasiven oder verschmierenden Material, mit dem die Trennwirkung eines zu Sabotagezwecken eingesetzten Trennmittels, z.B. einer Schleif- und Trennscheibe, eines Sägeblatts oder dgl. beeinträchtigt und bevorzugt auch eliminiert wird. Das besagte Trennwerkzeug wird dadurch stumpf bevor der Receiver (23) und insbesondere sein Deckel (25), geöffnet werden kann, um die versenkt angeordnete, geschlossene Riegeleinrichtung (12) für eine Sabotage zugänglich zu machen.

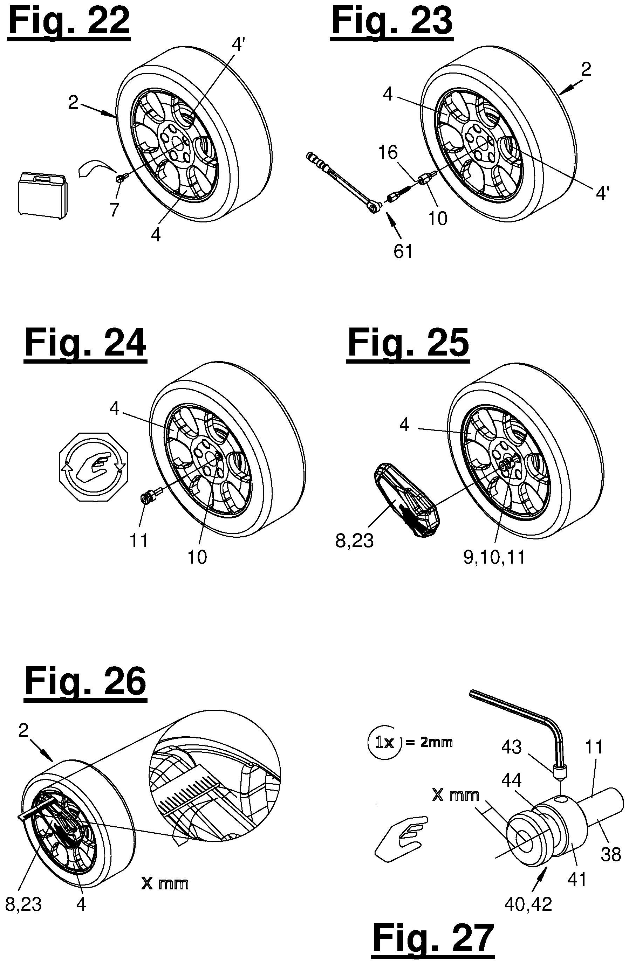

Das Verfahren zum sicheren Anbau der Wegfahrsperre (1) an einem Fahrzeugrad (2) eines Straßenfahrzeugs (3) umfasst folgende in Figur 22 bis 30 dargestellte Schritte.

Zunächst wird die Fixiervorrichtung (9) am Fahrzeugrad (2) befestigt und dann die Sperrvorrichtung (8) auf der Fixiervorrichtung (9) montiert. Hierfür kann zuerst gemäß Figur 22 und 23 das Ersatz-Befestigungsmittel (10) im Austausch gegen eine Radbefestigung (7) am Fahrzeugrad (2), insbesondere an der Radnabe (4'), mittels des Betätigungselements (16) und eines Werkzeugs (61) befestigt werden. Anschließend wird gemäß Figur 24 der Adapter (11) nebst seiner Stelleinrichtung (40) und des ersten Riegelelements (44) mit dem Ersatz-Befestigungsmittel (10) mithilfe des Verbindungsmittels (18), insbesondere Schraubmittels, fest verbunden. Danach wird gemäß Figur 25 die Sperrvorrichtung (8), insbesondere der Receiver (23), mit der Aufnahme, insbesondere der Führungshülse (34), auf den Stellkörper (41) der Stelleinrichtung (40) aufgesetzt und in Anschlagstellung gebracht. Die Riegeleinrichtung (12) kann dabei geöffnet bleiben.

In dieser Montagestellung kann gemäß Figur 26 der axiale Ist-Abstand der Bodenseite des Receivers (23) von der Radfelge (4) gemessen werden. Wenn der IST-Abstand von einem gewünschten SOLL-Abstand abweicht, kann eine Abstandsdifferenz ermittelt werden. Anschließend kann gemäß Figur 27 bedarfsweise der gewünschte axiale Abstand (a) des Receiver (23) von der Radfelge (4) durch Verstellen des Stellkörpers (41) am Adapter (11) um die ermittelte Differenz oder um einen anderen Wert eingestellt werden. Hierfür kann die Sperrvorrichtung (8), insbesondere der Receiver (23), wieder von der Fixiervorrichtung (9) abgenommen bzw. demontiert werden. Anschließend kann der Stellkörper (41) um den gewünschten Differenzweg durch Drehung axial verstellt werden. Hierfür kann der axiale Weg über die bekannte Steigung in einen entsprechenden Drehwinkel bzw. eine Zahl von Umdrehungen umgerechnet werden. Für die Verstellung kann das Arretiermittel (43) gelöst und anschließend wieder geschlossen bzw. arretiert werden.

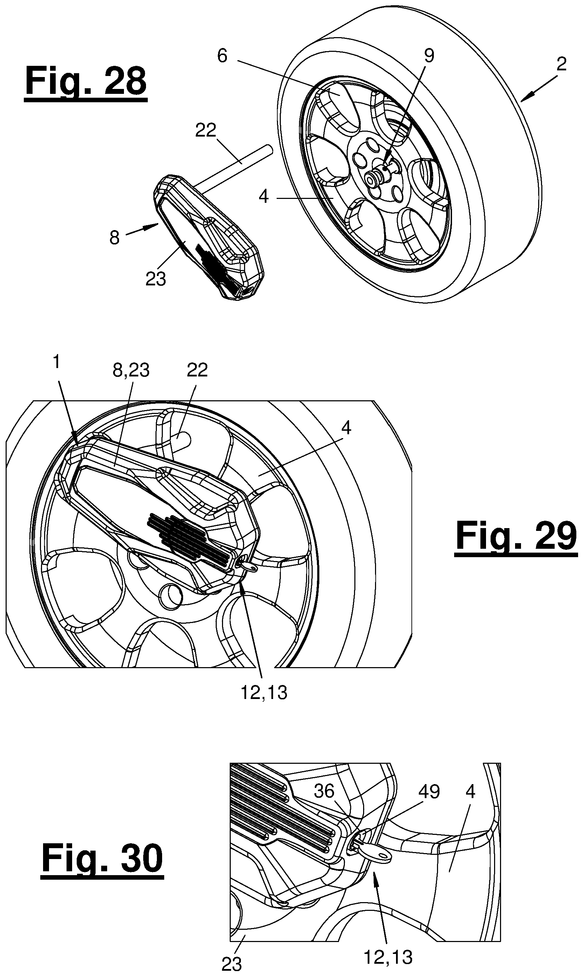

Auf die verstellte Fixiervorrichtung (9) wird dann gemäß zu Figur 28 die Sperrvorrichtung (8) mit dem Receiver (23) wieder in Anschlagstellung aufgesetzt und montiert sowie durch Betätigung der Riegeleinrichtung (12) verriegelt und mit der Sicherungseinrichtung (13), insbesondere dem Schloss (49), gesichert. Der Sperrmittel (22) wird dabei in der vorbeschriebenen Weise relativ zum Fahrzeugrad (2) bewegt und ggf. in Eingriff gebracht. Figur 29 zeigt die Anbaustellung der Wegfahrsperre am Fahrzeugrad (2). Figur 30 verdeutlicht im Ausschnitt die Betätigung der Sicherungseinrichtung (13) bzw. des Schlosses (49) mit einem Schlüssel.

Zum Abbau der Wegfahrsperre (1) können die Sicherungseinrichtung (13) und die Riegeleinrichtung (12) geöffnet und die Sperrvorrichtung (8) mit dem Receiver (23) von der Fixiervorrichtung (9) abgenommen und demontiert werden. Anschließend kann der Adapter (11) vom Ersatz-Befestigungsmittel (10) gelöst und abgenommen werden. Das Ersatz-Befestigungsmittel (10) kann am Fahrzeugrad (2) verbleiben oder kann wieder gegen die Radbefestigung (7) zurückgetauscht werden. Das Straßenfahrzeug (3) ist dann bereit für einen Fahrbetrieb.

Abwandlungen der gezeigten beschriebenen Ausführungsformen sind im Rahmen der Ansprüche in verschiedener Weise möglich. Die Befestigung des Ersatz-Befestigungsmittels (10) kann direkt an der drehbaren Radfelge (4) erfolgen und muss nicht an der Radnabe (4') angreifen. Das Ersatz-Befestigungsmittel (10) kann dabei auch in anderer Weise ausgebildet sein.

Der Adapter (11) kann mit dem Ersatz-Radbefestigungsmittel (10) in anderer Weise und insbesondere fest sowie dauerhaft verbunden sein. Dies kann z.B. durch eine stoffliche Verbindung insbesondere ein Anformen des Adapters (11) am Korpus (14) erfolgen.

Je nach Art der Radbefestigung (7) können das Ersatz-Befestigungsmittel (10) und der Adapter (11) eine andere Ausbildung und Ausrichtung haben. Sie können auch bereichsweise schräg zur Radachse ausgerichtet und gegebenenfalls in abgewinkelter Form ausgebildet sein.

Der gehäuseartige Receiver kann analog zur GB 2 483 109 B nur den schalenförmigen Deckel umfassen, wobei ein Boden entfallen kann. Am Bodenbereich des Receivers bildet dann die Schalenöffnung des Deckel eine Durchgangsöffnung für den Adapter.

Die verschiedenen beschriebenen Komponenten der Wegfahrsperre (1) können aus einem beliebig geeigneten und widerstandsfähigen Material ausgebildet sein, z.B. aus Stahl. Es können außerdem Verbundwerkstoffe, insbesondere mit einer Faserverstärkung oder mit Partikeleinlagerungen, z.B. aus Korund, eingesetzt werden.

### BEZUGSZEICHENLISTE

- 1: Wegfahrsperre
- 2: Fahrzeugrad
- 3: Strassenfahrzeug, Anhänger
- 4: Radfelge
- 4': Radnabe
- 5: Reifen
- 6: Felgenöffnung
- 7: Radbefestigung
- 8: Sperrvorrichtung
- 9: Fixiervorrichtung
- 10: Ersatz-Befestigungsmittel
- 11: Adapter
- 12: Riegeleinrichtung
- 13: Sicherungseinrichtung
- 14: Korpus
- 15: Radbefestigungselement, Schraubbolzen
- 16: Betätigungselement, Sechskant
- 17: Ansatz
- 18: Verbindungsmittel, Schraubmittel
- 19: Verbindungselement, Schrauböffnung
- 20: Längsachse
- 21: freier Endbereich
- 22: Sperrmittel, Sperrstange
- 23: Receiver
- 24: Boden
- 25: Deckel
- 26: Innenraum Receiver
- 27: Führung für Sperrmittel
- 28: Durchgangsöffnung Adapter
- 29: Durchlassöffnung für Sperrmittel
- 30: Führungskanal
- 31: Führungselement
- 32: Deckelkammer
- 33: Füllung
- 34: Führungshülse für Adapter
- 35: Einführöffnung
- 36: Aufnahmeöffung für Schloss
- 37: Verbindungselement, Schraubzapfen
- 38: Schaft
- 39: Kappe
- 40: Stelleinrichtung
- 41: Stellkörper
- 42: Stellverschraubung
- 43: Arretiermittel
- 44: Riegelelement an Adapter
- 45: Riegelelement an Receiver
- 46: Ringnut
- 47: Riegelstift
- 48: Riegelaktor
- 49: Schloss
- 50: Schließzylinder
- 51: Steller, Schieber
- 52: Lagesicherung
- 53: Hülsenboden
- 54: Durchtrittsöffnung
- 55: Außenplatte
- 56: Innenplatte
- 57: Führungskulisse
- 58: Fixiermittel
- 59: Steg innenseitig
- 60: Rippe außenseitig
- 61: Werkzeug

- a: Abstand

## Patentansprüche

1. Wegfahrsperre für ein Fahrzeugrad (2) eines Strassenfahrzeugs (3), wobei die Wegfahrsperre (1) eine die Wegfahrbewegung des Fahrzeugrads (2) verhindernde Sperrvorrichtung (8) mit einem gehäuseartigen Receiver (23) nebst einem daran angeordneten, eine Wegfahrbewegung des Fahrzeugrads (2) sperrenden Sperrmittel (22) und eine Fixiervorrichtung (9) umfasst, welche dazu ausgebildet ist, die Sperrvorrichtung (8) an einer drehbaren Radfelge (4) des Fahrzeugrads (2) lösbar und sicherbar zu fixieren, wobei die Fixiervorrichtung (9) ein Ersatz-Befestigungsmittel (10), ausgebildet für die Befestigung der Radfelge (4) am Strassenfahrzeug (3), insbesondere an einer Radnabe, eine Riegeleinrichtung (12) und eine Sicherungseinrichtung (13) umfasst, wobei die Riegeleinrichtung (12) zusammenwirkende und von der Sicherungseinrichtung (13) beaufschlagbare Riegelelemente (44,45) umfasst, die in Eingriffsstellung ein Entfernen der Sperrvorrichtung (8) vom Fahrzeugrad (2) verhindern, **dadurch gekennzeichnet, dass** die Fixiervorrichtung (9) einen länglichen Adapter (11) umfasst, welcher durch ein Verbindungsmittel (18), insbesondere ein Schraubmittel, mit dem freien Endbereich (21) des Ersatz-Befestigungsmittels (10) und in dessen axialer Verlängerung verbindbar oder verbunden ist,
- wobei ein erstes Riegelelement (44) am Adapter (11) angeordnet ist und ein weiteres Riegelelemente (45) im Receiver (23) angeordnet und mittels der Sicherungseinrichtung (13), insbesondere eines Schlosses (49), bewegbar und in sicherbaren Eingriff mit dem ersten Riegelelement (44) bringbar ist.

2. Wegfahrsperre nach Anspruch 1, **dadurch gekennzeichnet, dass** das erste Riegelelement (44) beweglich am Adapter (11) gelagert sowie mittels einer Stelleinrichtung (40) in seinem axialen Abstand zum Ersatz-Befestigungsmittel (10) verstellbar ist,
- wobei das weitere Riegelelemente (45) axial am Receiver (23) festgelegt ist,
- wobei die Fixiervorrichtung (9) verstellbar ausgebildet ist, um die Sperrvorrichtung (8) in einem einstellbarem axialen Abstand (a) an der Radfelge (4) zu montieren,
- wobei der axiale Abstand der Sperrvorrichtung (8) von der Radfelge (4) durch eine Verstellung des ersten Riegelelements (44) am Adapter (11) einstellbar ist.

3. Wegfahrsperre nach Anspruch 1 oder 2, **dadurch gekennzeichnet, dass** die Eingriffsstellung der Riegelelemente (44,45) im gehäuseartige Receiver (23) angeordnet ist.

4. Wegfahrsperre nach Anspruch 1, 2 oder 3, **dadurch gekennzeichnet, dass** der gehäuseartige Receiver (23) einen hohlen Innenraum (26) aufweist, der zumindest bereichweise mit einer Füllung (33) aus einem Antisabotage-Material, insbesondere Korrund, versehen ist.

5. Wegfahrsperre nach einem der vorhergehenden Ansprüche, **dadurch gekennzeichnet, dass** der Receiver (23) mittels der Riegeleinrichtung (12) lösbar an der Fixiervorrichtung (9) montierbar oder montiert ist, wobei die Riegelelemente (44,45) in Montagestellung in einem hohlen Innenraum (26) des Receivers (23) angeordnet sind.

6. Wegfahrsperre nach einem der vorhergehenden Ansprüche, **dadurch gekennzeichnet, dass** das Sperrmittel (22) verstellbar am Receiver (23) angeordnet ist, wobei bevorzugt das Sperrmittel (22) als Sperrstange ausgestaltet ist, die dazu ausgebildet ist, das Fahrzeugrad (2) mit jeweils endseitigem Überstand durch eine Felgenöffnung (6) zu durchgreifen oder außenseitig zu umgreifen.

7. Wegfahrsperre nach einem der vorhergehenden Ansprüche, **dadurch gekennzeichnet, dass** der Receiver (23) dazu ausgebildet ist, das Sperrmittel (22) mit der hiervon seitlich distanziert angeordneten Fixiervorrichtung (9) zu verbinden und zu überdecken.

8. Wegfahrsperre nach einem der vorhergehenden Ansprüche, **dadurch gekennzeichnet, dass** das Ersatz-Befestigungsmittel (10) einen Korpus (14) mit einem Radbefestigungselement (15), insbesondere einem Radschraubbolzen, einem Betätigungselement (16), insbesondere einem Sechskant, und einem Verbindungselement (19), insbesondere einer Schrauböffnung, des Verbindungsmittels (18) zur Adapterverbindung aufweist, wobei bevorzugt der Korpus (14) hülsenartig ausgebildet ist, wobei das Betätigungselement (16) als Innensechskant ausgebildet und innen im Korpus (14) angeordnet ist, wobei das Verbindungselement (19) axial unter dem Innensechskant angeordnet ist.

9. Wegfahrsperre nach einem der vorhergehenden Ansprüche, **dadurch gekennzeichnet, dass** die Stelleinrichtung (40) ein stellbares Arretiermittel (43) aufweist, das zur Arretierung des ersten Riegelelements (44) im gewünschten axialen Abstand zum Ersatz-Befestigungsmittel (10) ausgebildet ist, wobei bevorzugt die Stelleinrichtung (40) einen axial beweglich am Adapter (11) gelagerten Stellkörper (41) mit dem ersten Riegelelement (44) umfasst.

10. Wegfahrsperre nach einem der vorhergehenden Ansprüche, **dadurch gekennzeichnet, dass** das erste Riegelelement (44) am Adapter (11), insbesondere am Mantel des bevorzugt zylindrischen Stellkörpers (41), angeordnet und bevorzugt ringartig ausgebildet ist, wobei bevorzugt das weitere Riegelelement (45) versenkt im Receiver (23) eigenständig und quer zur Längsache des Adapters (11) beweglich gelagert ist.

11. Wegfahrsperre nach einem der vorhergehenden Ansprüche, **dadurch gekennzeichnet, dass** der Receiver (23), bevorzugt im Innenraum (26), eine definierte, bevorzugt formschlüssige, Aufnahme für den Adapter (11), insbesondere dessen Stellkörper (41), und die Riegelelemente (44,45) aufweist, wobei bevorzugt der Receiver (23) in einem Bodenbereich eine Durchgangsöffnung (28) und im Innenraum (26) eine stirnseitig offene Führungshülse (34) für den Adapter (11), insbesondere den Stellkörper (41), aufweist.

12. Wegfahrsperre nach Anspruch 11, **dadurch gekennzeichnet, dass** der Receiver (23) einen Boden (24) und einen schalenartigen Deckel (25) umfasst, wobei bevorzugt der Receiver (23) im Innenraum (26) eine Führung (27) für das Sperrmittel (22) aufweist und bevorzugt die Führungshülse (34) am Deckel (25) des Receivers (23) angeordnet ist.

13. Wegfahrsperre nach Anspruch 12, **dadurch gekennzeichnet, dass** der Boden (24) eine Durchgangsöffnung (28) für den Adapter (11), insbesondere den Stellkörper (41), und eine bevorzugt schlüssellochartig ausgebildete Durchlassöffnung (29) für das Sperrmittel (22) aufweist, wobei der Boden (24) mehrlagig ausgebildet ist und eine Außenplatte (55) sowie eine parallele Innenplatte (56) umfasst, welche die Durchgangsöffnung (28) und Durchlassöffnung (29) aufweisen, wobei an der Innenplatte (56) eine Führungskulisse (57) für ein verbreitertes Führungselement (31) am Ende des Sperrmittels (22) angeordnet ist.

14. Verfahren zum sicheren Anbau einer Wegfahrsperre (1) an einem Fahrzeugrad (2) eines Strassenfahrzeugs (3), wobei die Wegfahrsperre (1) gemäß einem der Ansprüche 1 bis 13 ausgebildet ist, **dadurch gekennzeichnet, dass** die Fixiervorrichtung (9) am Fahrzeugrad (2) befestigt und dann die Sperrvorrichtung (8) auf der Fixiervorrichtung (9), insbesondere auf dem Adapter (11), aufgesetzt und montiert wird.

15. Verfahren nach Anspruch 14, **dadurch gekennzeichnet, dass** der axiale IST-Abstand des montierten Receivers (23) von der Radfelge (4) gemessen und eine evtl. Differenz zum SOLL-Abstand ermittelt werden, wobei dann bedarfsweise der gewünschte axiale Abstand (a) des Receivers (23) von der Radfelge (4) durch Verstellen des Stellkörpers (41) am Adapter (11) um die ermittelte Differenz oder einen anderen Wert eingestellt wird.
